# EUROPÄISCHE PATENTANMELDUNG

(11) **EP 2 700 798 A1**
(43) Veröffentlichungstag der Anmeldung: **26.02.2014**
(21) Anmeldenummer: 12181150.9
(22) Anmeldetag: 21.08.2012
(51) Int. Cl.: F02C 7/06, F01D 9/06

(54) **Strömungsmaschine umfassend einen Rotor und ein Gehäuse**

(71) Anmelder: Siemens Aktiengesellschaft, 80333 München (DE)
(72) Erfinder: Seiler, Marcel, 46539 Dinslaken (DE)

(57) **Zusammenfassung**

Dampfturbine (1) mit einem Rotor (3) und einem Gehäuse, wobei der Rotor mit zwei Lagern (13, 14) gelagert ist und das in Strömungsrichtung hintere Lager (14) zur Stützung des Rotors (3) vor der letzten Laufschaufelstufe angeordnet wird.

## Beschreibung

Die Erfindung betrifft eine Strömungsmaschine, insbesondere Dampfturbine umfassend einen Rotor, der drehbar gelagert ist und Laufschaufeln umfasst, ein Gehäuse, das um den Rotor angeordnet ist, wobei das Gehäuse Leitschaufeln umfasst, ein erstes Lager und ein zweites Lager zum Lagern des Rotors.

In der kommunalen Energieversorgung werden unter anderem Strömungsmaschinen eingesetzt, die eine vergleichsweise große Baulänge aufweisen. Ein Beispiel für solch eine Strömungsmaschine ist eine Dampfturbine, die im Wesentlichen einen Rotor und ein um den Rotor angeordnetes Gehäuse aufweist. Der Rotor ist hierbei ein Bauteil, das mehrere Meter lang sein sowie ein Gewicht von mehreren Tonnen aufweisen kann. In der Regel werden die Rotoren auf zwei Lagern drehbar gelagert, wobei im Betrieb vergleichsweise hohe Umdrehungsdrehzahlen wie bspw. 50 Hz bzw. 60 Hz oder mehr vorkommen können. Solch hohe Drehfrequenzen gekoppelt mit dem Gewicht und der Länge der Rotoren erfordern eine präzise Herstellung, damit ein sicherer Betrieb möglich ist. Die maximale Länge eines solch ausgeführten Rotors ist dadurch begrenzt, dass die Steifigkeit des Teilturbinenstrangs begrenzt ist und im Zusammenhang mit den rotordynamischen Eigenschaften nicht verlängert werden kann. Des Weiteren hängt die maximale Länge des Rotors stark von der Position der Lagerstellen und der Abstützung des Lagergehäuses ab.

Bei bekannten Strömungsmaschinen erfolgt die Lagerung bei den bisherigen Teilturbinensträngen an den Wellenenden. Oft müssen hierzu die Lager in dem Dampfraum angeordnet werden. Darüber hinaus müssen solche Lager derart ausgeführt werden, dass das Lagergehäuse über Streben mit dem am Fundament gestützten Diffusor verbunden werden. Solche Konstruktionen werden auch als Sternlager bezeichnet.

Aufgabe der Erfindung ist es eine rotordynamisch verbesserte Strömungsmaschine anzugeben.

Gelöst wird diese Aufgabe durch eine Strömungsmaschine, insbesondere Dampfturbine umfassend einen Rotor, der drehbar gelagert ist und Laufschaufeln umfasst, ein Gehäuse, das um den Rotor angeordnet ist, wobei das Gehäuse Leitschaufeln umfasst, ein erstes Lager und ein zweites Lager zum Lagern des Rotors, wobei das zweite Lager in Strömungsrichtung gesehen vor einer Laufschaufelstufe angeordnet ist.

Erfindungsgemäß wurde erkannt, dass die steifigkeitsoptimalen Lagerpositionen bei einer gleichmäßig belasteten Welle an den sogenannten Besselpunkten liegen. Diese Besselpunkte sind Berechnungen zufolge ca. 22% der Wellenlänge von den Wellenenden entfernt. Die Erfindung schlägt daher vor, zumindest ein Lager derart zu verschieben, dass die rotordynamischen Eigenschaften grundlegend verbessert werden. Dazu wird vorgeschlagen, dass das Lager in Strömungsrichtung gesehen vor einer Leitschaufelstufe angeordnet wird. Es wird somit vorgeschlagen, dass das Lager nicht als separates Bauteil am Rotorende angeordnet wird, sondern vielmehr in den Schaufelpfad der Strömungsmaschine integriert wird. Dabei wird zunächst vorgeschlagen, das Lager vor einer Laufschaufelstufe anzuordnen. Unter anderem bietet die Erfindung den Vorteil, dass das Lagergehäuse nunmehr ohne zusätzliche Lagerstützen von einer Leitschaufelstufe getragen werden kann.

Vorteilhafte Weiterbildungen sind in den Unteransprüchen angegeben.

So wird vorgeschlagen, das zweite Lager vor einer letzten Laufschaufelstufe anzuordnen. Das bedeutet, dass das Lager im Strömungskanal derart angeordnet wird, dass das Lager vor der letzten Laufschaufelstufe angeordnet ist.

In einer weiteren vorteilhaften Weiterbildung ist das Lagergehäuse an als Leitschaufeln ausgebildeten Lagerstützen angeordnet. Das bedeutet, dass die Lagerstützen eine thermodynamische Funktion erfüllen, und zwar die thermodynamische Funktion einer Leitschaufel. Das bedeutet, dass die Lagerstützen so ausgebildet werden, dass sie einem strömungsmechanischen Profil folgen, das durch eine Leitschaufelstufe vorgegeben ist. Somit kann das in den Strömungspfad verschobene Lager zusätzlich zu den rotordynamischen Eigenschaften auch thermodynamische Eigenschaften erfüllen, da die Lagerstützen auch als Leitschaufeln ausgebildet sind.

Vorzugsweise ist nach der letzten Laufschaufelstufe ein Diffusor angeordnet. Der Diffusor hat nunmehr vorteilhafterweise keine störende Lagerstütze mehr im Strömungspfad und kann somit die Druckrückgewinnung zielorientierter durchführen.

In vorteilhafter Weise wird die als Leitschaufel ausgebildete Lagerstütze derart ausgebildet, dass diese eine Vorrichtung zum Austausch von Energie und Signalen aufweist.

Die Erfindung liefert den Vorteil, dass ein in der Leitschaufelstufe integriertes Lager nunmehr weniger axialen Bauraum erfordert und einen geringeren Abstand zum Kondensator ermöglicht. Da das Lager durch die Leitschaufelstufe getragen wird, werden keine Lagerstützen benötigt, die zu Material-und Fertigungskosten führen und die Abströmung zum Kondensator behindern. Darüber hinaus wird die Steifigkeit des Teilturbinenstrangs deutlich erhöht, was zu einer deutlich verbesserten Rotordynamik führt. Das kann eine Reduktion der Radialspiele ermöglichen, um den Wirkungsgrad weiter zu verbessern.

Des Weiteren bietet die Erfindung den Vorteil, dass größere Abströmquerschnitte realisiert und längere Schaufelpfade genutzt werden.

Die Erfindung wird anhand eines Ausführungsbeispieles näher erläutert.

Es zeigen:
- Figur: eine Querschnittsansicht einer Dampfturbine.

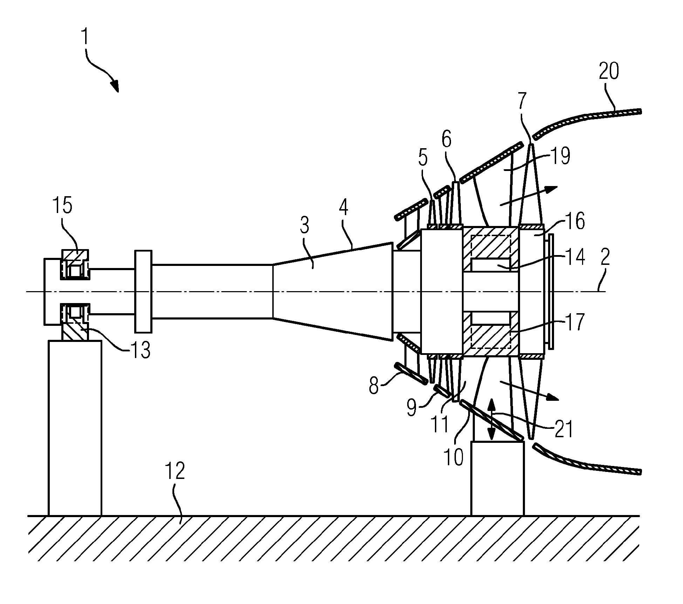

Die Figur zeigt eine als Dampfturbine 1 ausgebildete Ausführungsform einer Strömungsmaschine. Diese Dampfturbine 1 umfasst im Wesentlichen einen um eine Drehachse 2 drehbar gelagerten Rotor 3, an dem an der Rotoroberfläche 4 eine erste Laufschaufelstufe 5, eine zweite Laufschaufelstufe 6 und eine dritte Laufschaufelstufe 7 angeordnet ist. Die Dampfturbine 1 umfasst des Weiteren ein nicht näher dargestelltes Gehäuse, das um den drehbar gelagerten Rotor 3 angeordnet ist. An dem Gehäuse sind eine erste Leitschaufelstufe 8, eine zweite Leitschaufelstufe 9 und eine dritte Leitschaufelstufe 10 angeordnet.

Zwischen der ersten 5, zweiten 6 und dritten Laufschaufelstufe 7 und der ersten 8, zweiten 9 und dritten Leitschaufelstufe 10 ist ein Strömungspfad 11 ausgebildet, durch den im Betrieb ein Dampf strömt. Der Rotor 3 ist auf einem Fundament 12 über ein erstes Lager 13 und ein zweites Lager 14 gelagert. Das erste Lager 13 ist an einem ersten Ende 15 des Rotors 3 angeordnet. Das zweite Lager 14 ist an einem zweiten Ende 16 angeordnet.

Das zweite Lager 14 ist hierbei im Strömungspfad 11 vor der dritten Laufschaufelstufe 7, also somit der letzten Laufschaufelstufe angeordnet. Das Lager umfasst ein Lagergehäuse 17, das um das zweite Lager 14 angeordnet ist. An das Lagergehäuse ist eine als Leitschaufel ausgebildete Lagerstütze 19 angeordnet. Da die als Leitschaufel ausgebildete Lagerstütze 19 im Strömungspfad 11 angeordnet ist, nimmt diese als Leitschaufel ausgebildete Lagerstütze 19 an der Energieumwandlung des im Strömungspfad 11 befindlichen Dampfes teil.

Nach der dritten Laufschaufelstufe 7 ist ein Diffusor 20 angeordnet, in dem eine Druckrückgewinnung des im Strömungspfad 11 befindlichen Dampfes stattfindet.

In alternativen Ausführungsformen kann die als Leitschaufel ausgebildete Lagerstütze 19 mit dem zweiten Lager 14 auch vor der zweiten Laufschaufelstufe 6 oder noch weiter vorne im Strömungspfad 11 angeordnet werden.

In der als Leitschaufel ausgebildeten Lagerstütze 19 sind Vorrichtungen 21 zum Austausch von Energie und Signalen vorgesehen.

## Patentansprüche

1. Strömungsmaschine, insbesondere Dampfturbine (1) umfassend einen Rotor (3), der drehbar gelagert ist und Laufschaufeln umfasst, ein Gehäuse, das um den Rotor (3) angeordnet ist,
wobei das Gehäuse Leitschaufeln umfasst, ein erstes Lager (13) und ein zweites Lager (14) zum Lagern des Rotors (3), **dadurch gekennzeichnet, dass**
das zweite Lager (14) in Strömungsrichtung gesehen vor einer Laufschaufelstufe angeordnet ist.

2. Strömungsmaschine nach Anspruch 1,
wobei das zweite Lager (14) vor einer letzten Laufschaufelstufe angeordnet ist.

3. Strömungsmaschine nach Anspruch 1 oder 2,
wobei das zweite Lager (14) ein Lagergehäuse (17) und eine als Leitschaufeln ausgebildete Lagerstütze (19) aufweist.

4. Strömungsmaschine nach einem der vorhergehenden Ansprüche,
wobei in Strömungsrichtung gesehen nach der letzten Laufschaufelstufe ein Diffusor angeordnet ist.

5. Strömungsmaschine nach einem der vorhergehenden Ansprüche,
wobei in der als Leitschaufel ausgebildeten Lagerstütze (19) Vorrichtungen zum Austausch von Energie und Signalen vorgesehen sind.
